**Europäisches Patentamt**

**European Patent Office**

**Office européen des brevets**

(11) Veröffentlichungsnummer: **0 001 437**
**A1**

## (12) EUROPÄISCHE PATENTANMELDUNG

(21) Anmeldenummer: 78101018.6

(22) Anmeldetag: 28.09.78

(51) Int. Cl.²: **B 01 D 53/34, F 23 G 7/06**

(30) Priorität: 10.10.77 DE 2745488

(43) Veröffentlichungstag der Anmeldung: 18.04.79
Patentblatt 79/8

(84) Benannte Vertragsstaaten: **BE CH DE FR GB NL**

(71) Anmelder: Bayer Aktiengesellschaft, Zentralbereich Patente, Marken und Lizenzen Bayerwerk, D-5090 Leverkusen 1 (DE)

(72) Erfinder: Kremer, Hans, Prof. Dr., Rüsbergweg 30, D-5810 Witten 3 (DE)
Erfinder: Kühn, Friedhelm, Wiescher Weg 18, D-4330 Mülheim/Ruhr (DE)
Erfinder: Wiebe, Herbert, Roonstrasse 3, D-4150 Krefeld (DE)
Erfinder: Germerdonk, Rolf, Prof. Dr., Im Grundbirngarten 7, D-6750 Kaiserslautern 32 (DE)
Erfinder: Hüning, Werner, Carl-Leverkus-Strasse 3, D-5068 Odenthal (DE)
Erfinder: Gockel, Claus, Ginsterweg 3, D-5068 Odenthal (DE)

(54) Verfahren und Vorrichtung zur Verbrennung explosibler Gase.

(57) Brenner zur thermischen Verbrennung von zumindest zeitweise explosiven Gasen, bei dem die Gase über eine Vielzahl von die Beruhigung der Gasströme bewirkenden Durchtrittskanälen (3) im wesentlichen tangential zur Brennerachse in eine Brennkammer (4) eingeleitet und dort unter Ausbildung eines überkritischen Drallfeldes mit peripherer Vorwärtsströmung und innerer axialer Rückströmung verbrannt werden.

EP 0 001 437 A1

- 1 -

BAYER AKTIENGESELLSCHAFT          5090 Leverkusen, Bayerwerk
Zentralbereich
Patente, Marken und Lizenzen      Dp/bc/kl

Verfahren und Vorrichtung zur Verbrennung explosibler Gase

Die vorliegende Erfindung betrifft ein Verfahren und eine Vorrichtung zur thermischen Reaktion zumindest zeitweise explosibler Gase und/oder Gasgemische. Das Hauptanwendungsgebiet der vorliegenden Erfindung liegt in der thermischen Reinigung von Abluft, die zumindest zeitweise aus einem zündfähigen Gemisch besteht.

Für Abluft, insbesondere auch aus chemischen Produktionsbetrieben, die stark wechselnde Mengen an organischen Bestandteilen enthält, ist in besonders schwierig gelagerten Fällen als einzige wirkungsvolle Reinigungsmaßnahme nur das thermische Zersetzen der organischen Stoffe möglich. In anderen Fällen wäre es wünschenswert, technisch aufwendige chemische und physikalische Abgasreinigungsverfahren durch ein thermisches Verbrennungsverfahren zu ersetzen, wobei die bei der Verbrennung freiwerdende Wärme als Energiequelle zur Verfügung gestellt werden könnte.

Besteht das Trägergas praktisch aus Luft, d.h. ist die Sauerstoffkonzentration ungefähr 21 %, so kann dieses Gas als Verbrennungsluft in einen geeigneten Brenner mit nach-

Le A 18 251 - Ausland

- 2 -

geschalteter Ausbrennkammer eingeleitet werden. Es muß dann ein Hilfsbrennstoff, z.B. Erdgas oder Heizöl, zugespeist werden, um die Zersetzungstemperatur in der Flamme, z.B. 850°C, zu erreichen. Es ist dabei bekannt, die Abluft in Drallbrennkammern zu verbrennen. Ein spezieller Typ einer Drallbrennkammer ist z.B. unter dem Begriff Combustor bekannt und beispielsweise beschrieben in Brennstoff, Wärme, Kraft Nr. 3, März 1971, Seiten 98 bis 102.

Der Sauerstoffgehalt sowie die Beladung des Abgases mit brennbaren organischen Stoffen kann in weiten Grenzen sehr schwanken, so daß das Abgas zumindest zeitweise soviel Sauerstoff und zugleich auch organische Beladung enthält, daß es zündfähig oder explosiv ist. Wird ein solches Gas nun in eine Flamme geleitet, dann besteht die Gefahr der Rückzündung in die Brennerzuleitung und weiter bis in den Bereich, aus dem dieses Abgas abgesaugt wird.

Bisher ist kein Verfahren bekannt, nach dem solche, in Konzentration und Menge stark schwankende, explosible Gemische direkt in eine Verbrennungseinrichtung zum Zersetzen der organischen Stoffe gefahrlos eingeleitet werden können. Eine bekannte Möglichkeit für einen gefahrlosen Betrieb ist das Zumischen einer so großen, nicht organisch beladenen Luft- oder Gasmenge zur Verdünnung der explosiblen Gemische, daß die resultierende Konzentration die untere Explosionsgrenze in jedem Fall unterschreitet. Dieses Verfahren hat jedoch den Nachteil, daß ständig auch die Zusatzluft- oder Zusatzgasmenge bis auf die Zersetzungstemperatur (z.B. 850°C) erwärmt werden muß. Sind die Schwankungen der Abgasmenge sehr groß, dann wird die Zusatzmenge immer ungünstiger im Ver-

Le A 18 251

- 3 -

herhältnis zur mittleren zu verbrennenden Abgasmenge, d.h.
der spezifische Hilfsbrennstoffbedarf je $m^3$ Abgas wird im
zeitlichen Mittel immer größer. Darüberhinaus muß die Verbrennungseinrichtung für den um ein vielfaches erhöhten
Gasdurchsatz dimensioniert sein.

Aufgabe der vorliegenden Erfindung ist es daher, ein Verfahren und eine Vorrichtung zur Verbrennung explosibler Gase
zur Verfügung zu stellen.

Gegenstand der vorliegenden Erfindung ist ein Verfahren
zur thermischen Verbrennung zumindest zeitweise explosibler
Gase und/oder Gasgemische, das dadurch gekennzeichnet ist,
daß das zu verbrennende Gas in einer Vielzahl getrennter,
beruhigt-gerichteter Gasströme mit einer Mindestströmungsgeschwindigkeit, die größer ist, als die unter den
möglichen zu verbrennenden Gaszusammensetzungen auftretende größte Flammengeschwindigkeit, unter einem solchen
Winkel zur gemeinsamen Achse aller Gasströme in einen für
alle Gasströme gemeinsamen Brennerraum eingeführt wird, der
dem im Brennerraum wiedervereinigten Gasstrom ein überkritisches Drallfeld mit peripherer Vorwärtsströmung und innerer axialer Rückströmung aufprägt, und wobei gegebenenfalls
zusätzlich Brennstoff und/oder Luft dem Brennerraum zugeführt wird.

Die Strömungsverhältnisse im überkritischen Drallfeld sind
in "Gas-Wärme-International", Band 26, Nr. 1, Seiten 5 - 12
(1977) beschrieben.

Le A 18 251

- 4 -

Zur Gewährleistung einer rückzündsicheren Einführung der zu verbrennenden zündfähigen Gas ist Voraussetzung, daß die örtliche Strömungsgeschwindigkeit an jeder Stelle in dem Einströmorgan größer ist als die örtliche Flammenausbreitungsgeschwindigkeit. Die die örtliche Flammenausbreitungsgeschwindigkeit bestimmenden Einflußgrößen ergeben sich zunächst aus der chemischen Zusammensetzung des Gasgemisches, d.h. der Art der luftfremden Stoffe, dem Sauerstoffgehalt und dem Wasserdampfgehalt, sowie der Homogenität der Mischung und der Temperatur des zu verbrennenden Gasgemisches. Die minimale Flammenausbreitungsgeschwindigkeit läßt sich als Grenzwert für laminare Gasströmung ermitteln. Bei turbulenter Gasströmung kann die örtliche Flammengeschwindigkeit um ein Vielfaches höher liegen als die sich als Grenzwert ergebende minimale Flammenausbreitungsgeschwindigkeit bei laminarer Strömung.

Die die örtliche Strömungsgeschwindigkeit im Einströmorgan bestimmenden Einflußgrößen sind die mittlere Strömungsgeschwindigkeit im Einströmorgan, das Geschwindigkeitsprofil, der Turbulenzgrad der Strömung, sowie Wirbelbildung durch Strömungshindernisse. Je asymmetrischer das Geschwindigkeitsprofil und je turbulenter die Strömung ist, desto höher muß die aufgeprägte mittlere Strömungsgeschwindigkeit im Einströmorgan sein, damit die örtliche Flammengeschwindigkeit an jeder Stelle im Einströmorgan übertroffen wird. Eine hohe mittlere Strömungsgeschwindigkeit verlangt jedoch einen erheblichen Vordruck der zu verbrennenden Gase vor dem Einstromorgan. Der Aufbau eines solchen Vordruckes für ein explosibles Gasgemisch ist jedoch grundsätzlich problematisch. Neben der Temperaturerhöhung während der Kompression und damit Erhöhung der örtlichen Flammenge-

- 5 -

schwindigkeit wird der Turbulenzgrad der Strömung ungünstig beeinflußt. Eine merkliche Druckerhöhung bei explosiblen Gasen birgt zudem das Risiko der unkontrollierbaren Zündung des Gasgemisches durch Entladung elektro-statischer Aufladungen aufgrund von mechanischer Reibung. Nicht zuletzt würde das Verfahren zur thermischen Abgasreinigung durch den erhöhten Energieaufwand bei der Erzeugung des notwendigen Vordrucks belastet.

Zur Herabsetzung der örtlichen Flammengeschwindigkeit und der notwendigen örtlichen Strömungsgeschwindigkeit des zu verbrennenden Gases vor dem Eintritt in den Brennraum wird dieses daher in eine Vielzahl getrennter Gasströme aufgeteilt, wobei sich die Einzelströme in einer hindernisfreien und krümmungsfreien Strömungsstrecke, deren Länge etwa dem 1- bis 10-fachen des Durchmessers eines Einzelgasstromes beträgt, beruhigt. Vorzugsweise beträgt die Länge dieser Beruhigungszone das 5- bis 8-fache des Durchmessers der Einzelgasströme. Der Durchmesser der Einzelgasströme beträgt zwischen 1 und 100 mm, bevorzugt zwischen 5 und 40 mm.

Überraschenderweise wurde gefunden, daß auf diese Weise trotz der im anschließenden Brennerraum erzeugten hohen Turbulenz und Pulsation das dem Brenner zugeführte Gas rückzündsicher beruhigt werden kann, ohne daß das im Brennraum vorherrschende hochturbulente Strömungsfeld die Beruhigung der Gasströme behindert.

Die minimale mittlere Strömungsgeschwindigkeit der beruhigt gerichteten Gasströme, bei der noch Rückzündsicherheit gewährleistet ist, muß im Einzelfall experimentell ermittelt werden. Mittlere Mindestgeschwindigkeiten, die etwa das 1,5- bis 2-fache der unter den möglichen zu verbrennenden

Le A 18 251

- 6 -

Gaszusammensetzungen auftretenden, experimentell zu ermittelnden größten Flammenausbreitungsgeschwindigkeit betragen, sind im allgemeinen ausreichend. Bevorzugt sind die mittleren Strömungsgeschwindigkeiten aller gerichtet beruhigten Einzelgasströme gleich und besitzen ein konstantes Strömungsprofil über ihren Querschnitt, da in diesem Falle die minimale mittlere integrale Strömungsgeschwindigkeit den geringsten Wert annehmen kann.

Die explosiblen Gase werden mit einer Temperatur, die mindestens unterhalb der Selbstentzündungstemperatur der Gase liegt, in die Verbrennungseinrichtung eingeführt. Bevorzugt beträgt die Temperatur der Gase zwischen Umgebungstemperatur und etwa 100°C.

Die Vielzahl getrennter beruhigt gerichteter Gasströme wird dadurch erzeugt, daß das Gas durch eine Vielzahl von Kanälen geleitet wird, deren Verhältnis von Durchmesser zu Länge zwischen etwa 1 bis 10, bevorzugt zwischen etwa 5 bis 8 beträgt. Zu den Wandungen dieser Kanäle hin fällt die Strömungsgeschwindigkeit des Gases über einen Bereich, der durch die laminare Grenzschichtdicke bestimmt ist, schnell gegen O ab. Die Wandungen der Durchtrittskanäle müssen in der Lage sein, soviel Wärme abzuführen, daß innerhalb der Grenzschicht mit geringer Strömungsgeschwindigkeit keine Rückzündung auftreten kann, d.h. der durch die Wärmeableitung der Wandung gegebene Löschabstand soll in der Größenordnung der laminaren Grenzschichtdicke liegen. Bevorzugt bestehen die Wandungen aus Metall und werden gekühlt, um eine Erwärmung durch Strahlung aus dem Brennerraum zu vermeiden.

Le A 18 251

- 7 -

Eine andere Ausführungsform des erfindungsgemäßen Verfahrens besteht darin, die Wandungen metallischer Durchtrittskanäle mit Schlitzen oder kleinen Löchern, bevorzugt mit mindestens einem Ringschlitz, zu versehen, durch die Inertgas oder Luft ins Innere der Kanäle einströmt, so daß sich innerhalb der laminaren Grenzschicht zumindest in einer Querschnittsfläche über dem Umfang jedes Einzelgasstromes ein nicht zündfähiges Gas befindet.

Die beruhigt gerichteten Einzelgasströme werden unter einem Winkel zur gemeinsamen Brennerachse, so daß die Strömungsrichtung mindestens eine Tangentialkomponente zur Brennerachse besitzt, in den gemeinsamen Brennerraum für alle Gasströme eingeleitet. Bevorzugt beträgt der Winkel ($\alpha$) der Strömung zwischen tangentialer und axialer Komponente zur Brennerachse bei Einleitung der Einzelgasströme über den Kopf des Brenners bis zu 30°, besonders bevorzugt zwischen 15 und 25°. Bei Einleitung der Einzelgasströme über den Mantel des Brenners beträgt der Winkel ( ß ) zwischen radialer und tangentialer Strömungskomponente zur Brennerachse bevorzugt zwischen 90 und 60°, besonders bevorzugt zwischen 75 und 65°. Dabei kann die Strömungsrichtung eine Anstellung in axialer Richtung besitzen, wobei der Winkel ($\gamma$) zwischen radialer und axialer Richtung bevorzugt zwischen -15 und 30°, besonders bevorzugt zwischen 5 und 25° beträgt.

Der Anstellwinkel aller beruhigt gerichteten Gasströme soll dabei einen gemeinsamen Drehsinn zur Brennerachse haben.

Le A 18 251

- 8 -

Die Druckdifferenz zwischen dem der Verbrennungseinrichtung zugeführten Gas zu dem hinter dem Brenner austretenden Gas beträgt zwischen etwa 1 und 500 mbar, vorzugsweise zwischen 1 und 100 mbar, besonders bevorzugt zwischen 20 und 100 mbar. Die Druckdifferenz wird bevorzugt durch Erzeugung eines Unterdruckes auf der Austrittsseite des Brenners bereitgestellt.

Die Verbrennung der explosiblen Gase erfolgt bei Temperaturen zwischen etwa 700 und 1500°C, bevorzugt zwischen 700 und 900°C.

Durch die Verbrennung der Gase im überkritischen Drallfeld kann der Volumenstrom des zu verbrennenden Gases in weiten Bereichen geregelt werden. Bei einem maximalen Druckverlust in der Verbrennungseinrichtung von etwa 50 mbar beträgt der Regelbereich bei Kohlenwasserstoffen etwa 1:10, bei einem Acetylen/Luftgemisch oder $H_2S$/Luftgemisch etwa 1:5 und bei einem Wasserstoff/Luftgemisch etwa 1:2. Bei Inkaufnahme höherer Vordrücke kann der Regelbereich weiter vergrößert werden. Die Flamme eines vorgemischten Gases brennt dann stabil, wenn die Flammengeschwindigkeit und die Strömungsgeschwindigkeit an einem Ort in der Flamme im Gleichgewicht stehen. Bei geringem Gasdurchsatz brennt die Flamme an der Stelle des Eintritts der beruhigt gerichteten Gasströme im Brennerraum und verlagert sich bei höheren Gasmengen, d.h. höheren Einströmgeschwindigkeiten in dem Bereich der peripheren Vorwärtsströmung des überkritischen Drallfeldes im Brennerraum.

Le A 18 251

- 9 -

Zur Gewährleistung einer guten Stabilisierung der Flamme im Brennerraum ist es vorteilhaft, die Querschnittsfläche des Brennerraums in mindestens einer Ebene quer zur Brennerachse mit einer Einschnürung zu versehen. Auf der Austrittsseite dieser Einschnürung bilden sich dann nach außen gerichtete Strömungswirbel aus, die die Flamme im Falle hohen Gasdurchsatzes an der Einschnürung festhalten. Vorteilhaft befindet sich die Einschnürung in einer Ebene quer zur Brennerachse, deren Entfernung von der Ebene des Eintritts der beruhigt gerichteten Gasströme in den Brennerraum etwa gleich dem Durchmesser des Brennerraums beträgt.

Der Sauerstoffgehalt des zu verbrennenden Gases kann zwischen O und 21 % betragen. Um eine vollständige Verbrennung zu gewährleisten, ist es notwendig, zumindest soviel Sauerstoff in den Brenner einzuführen, wie stöchiometrisch zu einer vollständigen Verbrennung notwendig ist. Bevorzugt enthält das zu verbrennende Gas den Sauerstoff um den Faktor 1 bis 4 überstöchiometrisch, besonders bevorzugt um den Faktor 1,5 bis 3 Gegebenenfalls kann dem zu verbrennenden Gas vor der Einleitung in die Verbrennungseinrichtung die notwendige Menge an Zusatzluft zugemischt werden. Es ist jedoch auch möglich, die Zusatzluft über von den beruhigt gerichteten Gasströmen getrennte Einführungsorgane, gegebenenfalls ebenfalls unter Drallerzeugung,einzuleiten.

Insbesondere bei sehr stark schwankendem Anfall von zu verbrennendem Gas, wenn das Risiko besteht, daß aufgrund zu geringen Gasanfalls die Mindestströmungsgeschwindigkeit der beruhigt gerichteten Gasströme nicht aufrechterhalten werden kann, ist es vorteilhaft, dem zu verbrennenden Gas von vorn-

Le A 18 251

- 10 -

herein soviel Luft zuzumischen, daß allein durch den Volumenstrom der zugemischten Luft die Mindestströmungsgeschwindigkeit der beruhigt gerichteten Gasströme gewährleistet wird. In diesem Fall wird eine Rückzündung auch dann vermieden, wenn zeitweise kein brennbares Gas anfällt.

In diesem zuletzt genannten Fall, oder wenn die zu verbrennenden Gase zeitweilig einen zu geringen Heizwert besitzen oder unbrennbar sind, ist es vorteilhaft, der Verbrennungseinrichtung zusätzlich Brennstoff zuzuführen. Im Falle daß gasförmiger Brennstoff (z.B. Erdgas) zugeführt wird, kann dieser dem zu verbrennenden Gas vor der Einleitung in die Verbrennungseinrichtung zugemischt werden. Der Zusatzbrennstoff kann aber auch in der Achse der Gasströme getrennt von die-sen oder tangential in den Brenner eingeleitet werden. Vorteilhaft ist es, den gasförmigen Brennstoff von der Austrittsseite des Brenners her in die axiale Rückströmung, wodurch diese noch verstärkt wird, einzuführen. Dabei wirkt sich die Vorwärmung des Zusatzbrennstoffs durch die austretenden Verbrennungsgase günstig auf die Energiebilanz aus.

Im Falle des Einsatzes von flüssigem Zusatzbrennstoff (z.B. Heizöl) wird dieser vorteilhaft in der gemeinsamen Achse der beruhigt gerichteten Gasströme getrennt von diesen in den Brennerraum eingedüst.

Eine besonders vorteilhafte Ausführungsform des erfindungsgemäßen Verfahrens besteht darin, in den Brennerraum gleichzeitig mit in der Wärme zersetzbaren Verunreinigungen beladene Abwässer und/oder in der Wärme zersetzbare flüssige oder feinteilige feste Schadstoffe einzuführen. Die Abwässer und/oder flüssigen Schadstoffe werden vorteilhaft

Le A 18 251

- 11 -

in der gemeinsamen Achse der beruhigt gerichteten Gasströme getrennt von diesen in den Brennerraum eingedüst. Feinteilige feste Schadstoffe werden vorteilhaft gemeinsam mit Zusatzluft pneumatisch in den Brennerraum gefördert.

Obwohl das Hauptanwendungsgebiet des erfindungsgemäßen Verfahrens in der thermischen Reinigung von zeitweise explosibler Abluft liegt, ist das Anwendungsgebiet nicht hierauf beschränkt. Das Verfahren kann vorteilhaft auch für die Energieerzeugung aus gasförmigen Energieträgern, wobei der Energieträger mit Sauerstoff und/oder Luft vorgemischt wird,eingesetzt werden, wenn ein weiter Regelbereich verlangt wird.

Besonders vorteilhaft wird das erfindungsgemäße Verfahren eingesetzt, wenn die Betriebsbedingungen wie Aufrechterhaltung der rückzündsicheren Mindestgeschwindigkeit und Verbrennungstemperatur automatisch überwacht und geregelt werden. Z.B. kann die rückzündsichere Mindestgeschwindigkeit durch Messung und Regelung der Strömungsgeschwindigkeit in der Zuleitung der zu verbrennenden Gase zum Brenner oder durch Messung und Regelung der Druckdifferenz zwischen dem der Verbrennungseinrichtung zugeführten Gas und dem hinter dem Brenner austretenden Gas selbsttätig aufrechterhalten werden, wobei im Falle zu geringer Strömungsgeschwindigkeit über auf die Meßgröße ansprechende Ventile Zusatzluft dem zu verbrennenden Gas zugeführt wird. Die Verbrennungstemperatur kann durch Thermoelemente oder pyrometrisch gemessen werden, wobei im Falle zu geringer Temperatur die Regelung durch zusätzliche Einspeisung von Brennstoff, oder im Falle zu hoher Verbrennungstemperatur durch zusätzliche Einspeisung von Luft erfolgt.

Le A 18 251

- 12 -

Gegenstand der vorliegenden Erfindung ist ferner die Vorrichtung zur Durchführung des erfindungsgemäßen Verfahrens.

Bei der nun folgenden Beschreibung der erfindungsgemäßen Vorrichtung wird auf die anliegenden Figuren Bezug genommen.

Figur 1 zeigt einen Querschnitt in axialer Richtung der
erfindungsgemäßen Vorrichtung.

Figur 2 zeigt einen Schnitt 2-2 durch die Vorrichtung der
Figur 1.

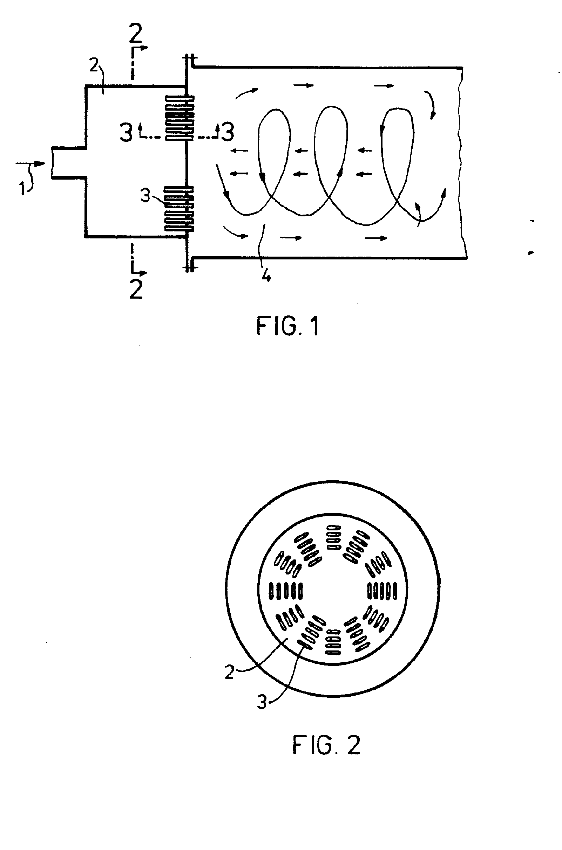

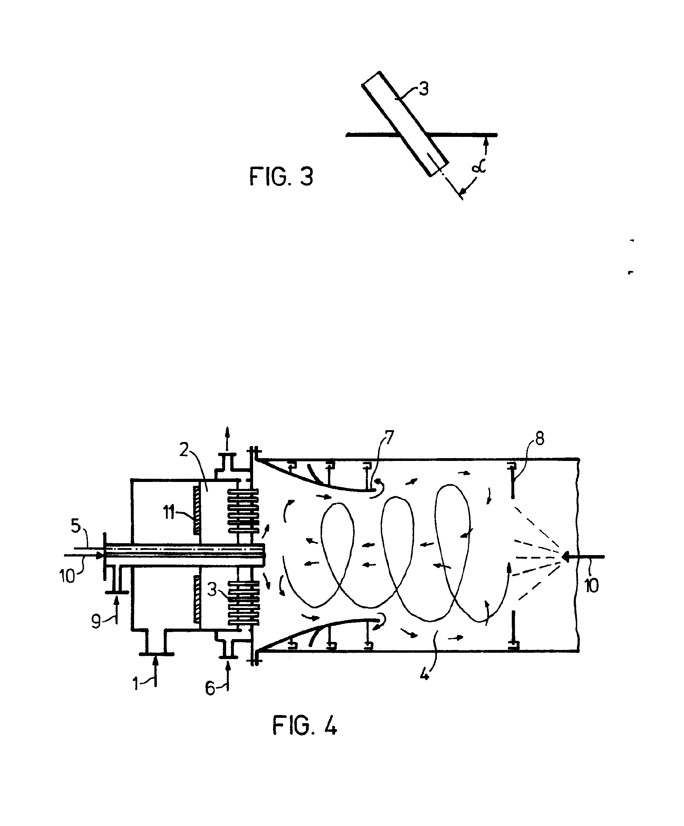

Figur 3 zeigt einen Teilschnitt 3-3 der Figur 1.

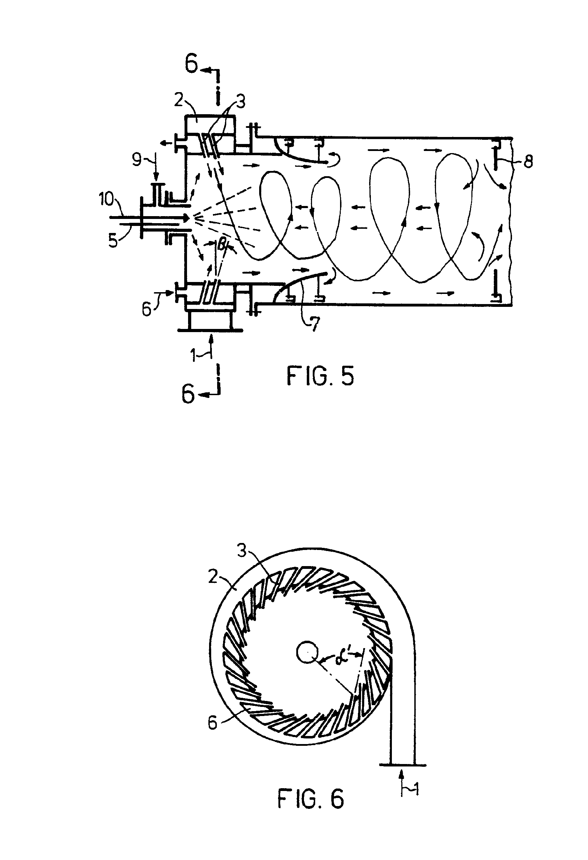

Figuren 4 bis 8 zeigen bevorzugte Ausführungsformen der erfindungsgemäßen Vorrichtung, wobei Figur 6 einen Querschnitt 6-6 durch die in Figur 5 dargestellte Vorrichtung zeigt.

Die in den Figuren angegebenen Ziffern bezeichnen im
einzelnen:

1 Einströmorgan für die Verbrennungsgase

2 Brennervorkammer

3 Verbindungskanäle zwischen Brennervorkammer und Brennraum

4 Brennerraum

5 Zündvorrichtung

6 Kühlmitteleintritt

7 Flammenstabilisierungsdüse

8 Blendenring

9 Zufuhr von gasförmigem Zusatzbrennstoff

10 Zufuhr für flüssigen Zusatzbrennstoff

11 Gitter als Strömungswiderstand

Die erfindungsgemäße Vorrichtung besteht aus einer Vorkammer (2), einer zylindrischen Brennkammer (4) und einer
Vielzahl von zwischen der Vorkammer (2) und der Brennkammer (4) angeordneten Durchtrittskanälen (3), wobei die

- 13 -

Achse der Durchtrittskanäle (3) mindestens eine Richtungskomponente tangential zur Brennerachse mit gleichem Drehsinn für alle Durchtrittskanäle (3) besitzt.

Die Durchtrittskanäle sind kreissymmetrisch zur Brennerachse angeordnet. Der Innendurchmesser der Durchtrittskanäle beträgt zwischen 1 und 100 mm, vorzugsweise zwischen 5 und 40 mm. Die Länge der Durchtrittskanäle beträgt etwa das 1- bis 10-fache ihres Innendurchmessers, vorzugsweise das 5- bis 8-fache des Innendurchmessers.

Die die Durchtrittskanäle bildenden Röhrchen sollen auch am Austrittsende der Röhrchen zum Brennraum hin ein ungestörtes Ausströmen der beruhigt gerichteten Gasströme gewährleisten, d.h. vorzugsweise ein kreissymmetrisches konstantes Strömungsprofil nicht stören. Dies wird im allgemeinen gewährleistet, wenn die Begrenzung der Röhrchen zum Brennraum hin senkrecht zur Achse der Röhrchen erfolgt. Es kann jedoch auch vorteilhaft sein, wenn die Röhrchen schräg zu ihrer Achse abgeschnitten sind, so daß die Mantellinie parallel zur Röhrchenachse, die dem Brennraum zugekehrt ist, etwas länger ist, als die dem Brennraum abgewandte zur Röhrchenachse parallele Mantellinie.

In einer Ausführungsform gemäß der Erfindung werden die die Durchtrittskanäle bildenden Röhrchen in die Rückwand des Brenners (Brennerkopf) eingeführt. Der Winkel $\alpha$ (Figur 3) beträgt dann vorzugsweise zwischen 0 und 30°, besonders bevorzugt zwischen 15 und 25°.

Nach einer anderen Ausführungsform der erfindungsgemäßen Vorrichtung werden die die Durchtrittskanäle bildenden Röhrchen über den Mantel des Brenners ( Figur 5) in den Brennraum eingeführt. Dabei beträgt der Winkel ß (Fi-

Le A 18 251

- 14 -

gur 6) zwischen radialer und tangentialer Richtung der Achse der Durchtrittskanäle bevorzugt zwischen 90 und 60°, besonders bevorzugt zwischen 75 und 65°. Die Röhrchen können dabei zusätzlich eine Anstellung in axialer oder gegenaxialer Richtung besitzen, wobei der Winkel $\gamma$ (Figur 5) zwischen -15 und 30°, besonders bevorzugt zwischen 5 und 25° betragen kann.

Die Anzahl der Durchtrittskanäle ist nach oben hin nicht begrenzt. Als zweckmäßig hat sich eine Zahl von zwischen 20 und 250 Durchtrittskanälen, bevorzugt zwischen 40 und 100 Durchtrittskanälen, erwiesen.

Bevorzugte Ausführungsformen besitzen ferner Kühleinrichtungen für die die Durchtrittskanäle bildenden Röhrchen (Figur 4 bis Figur 8). Das jeweils bei (6) eingeleitete Kühlmedium kann flüssig oder gasförmig sein, bevorzugt wird Luft eingesetzt.

Der Brennraum besitzt zur Stabilisierung der Flamme Einschnürungen (7) und/oder (8), wobei die erste Einschnürung, die vorzugsweise als verstellbare Stabilisierungsdüse (7) ausgebildet ist, etwa in einer Entfernung von den Durchtrittskanälen angebracht ist, die maximal dem Durchmesser des Brenners entspricht.

Zur Zündung des Brenners sind Vorrichtungen (5) zur Erzeugung eines elektrischen Funkens vorgesehen. Die Brenner können ferner Zufuhreinrichtungen (9) und/oder (10) zur Einführung von flüssigem oder gasförmigem Zusatzbrenn-

- 15 -

stoff enthalten, wobei die Brennstoffzufuhr in axialer und gegenaxialer Richtung erfolgen kann. Die Zufuhrvorrichtungen (9) und/oder (10) können auch für die Zuführung von mit in der Wärme zersetzbaren Verunreinigungen beladenen Abwässern und/oder in der Wärme zersetzbaren flüssigen oder feinteiligen festen Schadstoffen vorgesehen sein.

Zur Gewährleistung einer gleichmäßigen Durchtrittsgeschwindigkeit der zu verbrennenden Gase durch die einzelnen Durchtrittskanäle kann es zweckmäßig sein, in der Vorkammer (2) Strömungshindernisse (11), die z.B. in Form eines Drahtnetzes ausgebildet sein können, vorzusehen, um so das bei (1) einströmende Gas gleichmäßig auf die Vielzahl von Durchtrittskanälen (3) zu beaufschlagen.

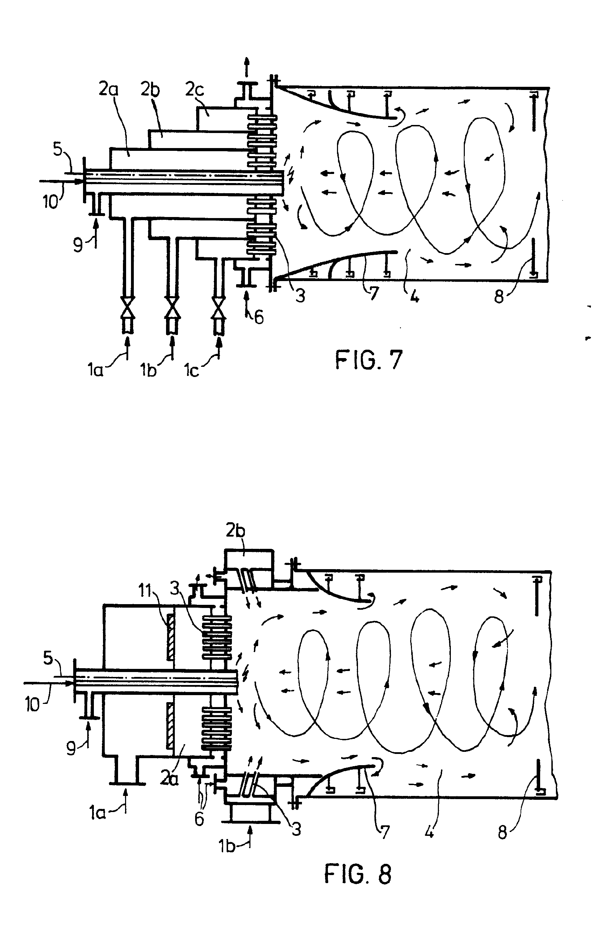

Die Vorrichtung gemäß der Erfindung kann durch den Fachmann, je nach der mit der Vorrichtung zu erfüllenden Aufgabe in weiten Grenzen variiert werden, bzw. es können die beschriebenen Einzelmerkmale in zweckmäßiger Weise kombiniert werden. Z.B. kann es zweckmäßig sein, gasförmigen Zusatzbrennstoff, Zusatzluft oder mehrere zu verbrennende Gase voneinander getrennt in den Brenner einzuführen. Hierzu kann es zweckmäßig sein, z.B. gemäß Figur 7 die Vorkammer (2) in mehrere Einzelkammern (2a), (2b), (2c) aufzuteilen, wobei durch die jeweils zugeordneten Einlässe (1a), (1b), (1c) die verschiedenen Gase getrennt eingeleitet werden. Die Ausführungsform gemäß Figur 7 erlaubt es ferner, bei geringem Anfall von zu verbrennendem Gas die notwendige Mindestströmungsgeschwin-

Le A 18 251

- 16 -

digkeit in den Durchtrittskanälen dadurch aufrechtzuerhalten, daß der Brenner z.B. nur über ein Zuführungsorgan (1c) beschickt wird, wodurch der Regelbereich des
Brenners um ein Mehrfaches erhöht wird, ohne daß die
Rückzündsicherheit gefährdet wird.

Eine andere Ausführungsform eines Brenners zur getrennten
Einleitung verschiedener Gase oder zur Regelung der Anzahl der mit dem zu verbrennenden Gas beschickten Durchtrittskanäle ist in Figur 8 dargestellt, wo ein Teil
der Durchtrittskanäle kopfseitig und ein anderer Teil
der Durchtrittskanäle mantelseitig in den Brenner eingeführt werden.

Le A 18 251

- 17 -

**Beispiel**

Ein Brenner, der im Prinzip in Figur 4 dargestellt ist, hatte folgende Abmessungen:

Durchmesser der Vorkammer (2): 720 mm

Durchmesser der Brennkammer (4): 790 mm

Anzahl der Durchtrittskanäle: 60

Länge der Durchtrittskanäle: 140 mm

Innendurchmesser der Durchtrittskanäle: 19,8 mm

Winkel der Achse der Brennerröhrchen zwischen tangentialer und axialer Richtung zur Brennerachse ($\alpha$): 25°

Im Brennerraum war eine verstellbare Stabilisierungsdüse mit einem Austrittsdurchmesser von 520 mm in einer Entfernung von den Durchtrittskanälen in Richtung der Brennerachse von 600 mm angebracht. Zur gleichmäßigen Verteilung des zu verbrennenden Abgases auf die einzelnen Einzelgasströme waren zwei Lochböden in der Vorkammer senkrecht zur Brennerachse angebracht. Als zündfähiges Abgas wurde Erdgas mit Luft gemischt. Das Verhältnis von Erdgas zu Luft wurde so variiert, daß der Sauerstoffgehalt in der Mischung zwischen der ein- bis dreifach stöchiometrisch notwendigen Menge zur vollständigen Verbrennung des Erdgases betrug. Das gemischte Gas wurde dem Brenner in einer Menge von 500 bis 5000 $m^3$/h beaufschlagt. Der Brennervordruck erreichte dabei den Maximalwert von 550 mm Wassersäule bei einem Gasdurchsatz von 5000 $m^3$/h. Bei einem Gasdurchsatz von 1000 $m^3$/h lag der Vordruck unterhalb 50 mm Wassersäule.

- 18 -

Im gesamten Regelbereich, bezüglich Gaszusammensetzung und beaufschlagter Gasmenge, betrug der Restgehalt an organischem Kohlenstoff im Abgas nach der Verbrennung unter 50 mg/m$^3$.

Patentansprüche

1. Verfahren zur thermischen Verbrennung zumindest zeitweise explosibler Gase und/oder Gasgemische zeitlich variabler chemischer Zusammensetzung und Explosionsfähigkeit, dadurch gekennzeichnet, daß das zu verbrennende Gas in einer Vielzahl getrennter beruhigt gerichteter Gasströme mit einer Mindestströmungsgeschwindigkeit, die größer ist, als die unter den möglichen zu verbrennenden Gaszusammensetzungen auftretende größte Flammenausbreitungsgeschwindigkeit, unter einem solchen Winkel zur gemeinsamen Achse aller Gasströme in einen für alle Gasströme gemeinsamen Brennerraum eingeführt wird, der dem im Brennerraum wieder-vereinigten Gasstrom ein überkritisches Drallfeld mit peripherer Vorwärtsströmung und innerer axialer Rückströmung aufprägt, und wobei gegebenenfalls zusätzlich Brennstoff und/oder Luft dem Brennerraum zugeführt wird.

2. Verfahren nach Anspruch 1, dadurch gekennzeichnet, daß die Einzelgasströme in einer hindernisfreien und krümmungsfreien Strömungsstrecke, deren Länge etwa dem 1- bis 10-fachen des Durchmessers eines Einzelgasstromes beträgt, beruhigt werden.

3. Verfahren nach einem der Ansprüche 1 oder 2, dadurch gekennzeichnet, daß die Einzelgasströme einen Durchmesser zwischen 1 und 100 mm, vorzugsweise zwischen 5 und 40 mm haben.

- 20 -

4. Brenner zur rückzündsicheren Verbrennung zumindest zeitweise explosibler Gase, bestehend aus einer Vorkammer (2),einer zylindrischen Brennkammer (4) und einer Vielzahl von zwischen der Vorkammer (2) und der Brennkammer (4) angeordneten Durchtrittskanälen (3), wobei die Achse der Durchtrittskanäle (3) mindestens eine Richtungskomponente tangential zur Brennerachse mit gleichem Drehsinn für alle Durchtrittskanäle (3) besitzt.

5. Brenner nach Anspruch 4, dadurch gekennzeichnet, daß die Länge der Durchtrittskanäle etwa das 1- bis 10-fache, vorzugsweise das 5- bis 8-fache ihres Innendurchmessers beträgt.

6. Brenner nach einem der Ansprüche 4 oder 5, dadurch gekennzeichnet, daß der Innendurchmesser der Durchtrittskanäle zwischen 1 und 100 mm, vorzugsweise zwischen 5 und 40 mm beträgt.

7. Brenner nach einem der Ansprüche 4 bis 6, dadurch gekennzeichnet, daß die Achsen der Durchtrittskanäle im wesentlichen tangential zur Brennerachse angeordnet sind.

8. Brenner nach Anspruch 7, dadurch gekennzeichnet, daß die Durchtrittskanäle in den Kopf des Brenners münden und die Achse der Durchtrittskanäle bis zu $30^{\circ}C$, bevorzugt zwischen 15 und $25^{\circ}$ in Richtung der Brennerachse geneigt sind.

9. Brenner nach Anspruch 7, dadurch gekennzeichnet, daß die Durchtrittskanäle über den Mantel des Brenners in den Brennerraum münden, und die Achse der Durchtrittskanäle bis zu $30^{\circ}C$, bevorzugt zwischen 15 und $25^{\circ}$, in Richtung radial zur Brennerachse geneigt sind.

- 21 -

10. Brenner nach mindestens einem der Ansprüche 4 bis 9, wobei die Zahl der Durchtrittskanäle zwischen 20 und 250, bevorzugt zwischen 40 und 100, beträgt.

FIG. 1

FIG. 2

FIG. 3

FIG. 4

FIG. 5

FIG. 6

FIG. 7

FIG. 8

Europäisches Patentamt

**EUROPÄISCHER RECHERCHENBERICHT**

0001437

Nummer der Anmeldung

EP 78 101 018.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHEMIE-INGENIEUR-TECHNIK, Band 49, Nr. 3 (22.3.77) Verlag Chemie, Weinheim W. HÜNING "Die thermische Reinigung zündfähiger Abluft" Seite 263 | 1,2,4, 5 |
| | -- | |
| PX | DE - A - 2 625 139 (BAYER) * Ansprüche 1 und 4 * | 1,4,8 |
| | -- | |
| - | DE - A - 2 027 535 (INSTITUT GASA) * Anspruch 3 * | 1 |
| | -- | |
| - | DE - A - 2 317 513 (BÖHLER-ZENKNER) * Ansprüche 5, 6, 25, 26, 31; Fig. 4, Position 21, 22 * | 1-4, 6-9 |
| | -- | |
| - | US - A - 3 999 936 (D.E.M. HASSEL-MANN) * Spalte 6, Fig. 4 * | 1,3,4, 6 |
| | -- | |
| - | US - A - 3 805 714 (BRULE) * Anspruch 1; Spalte 1; Fig. * | 1,4,7 |
| | -- | |
| - | DE- B - 2 031 002 (MITSUBISHI) * Spalte 3, Zeilen 20 und 22 * | 2,3,5 6,10 |
| | -- | |
| | ./.. | |

**KLASSIFIKATION DER ANMELDUNG (Int.Cl.²)**

B 01 D  53/34
F 23 G   7/06

**RECHERCHIERTE SACHGEBIETE (Int. Cl.²)**

B 01 D  53/34
F 23 D  13/40
F 23 D  13/46
F 23 D  15/00
F 23 D  21/00
F 23 G   7/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| Berlin | 19-01-1979 | KÜHN |

Europäisches
Patentamt

Nummer der Anmeldung

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | DE - A - 2 525 305 (PENSENSKY KOM-PESSORNY) <br> * ganzes Dokument * <br><br> -- | | |
| A | DE - B - 2 042 364 (MITSUBISHI) <br> * ganzes Dokument * <br><br> -- | | |
| A | FR - A - 2 290 634 (HOUILLERES LORRAINE) <br> * ganzes Dokument * <br><br> -- | | RECHERCHIERTE SACHGEBIETE (Int. Cl.²) |
| A | US - A - 3 867 089 (RHEINMETALL) <br> * ganzes Dokument * <br><br> -- | | |
| A | US - A - 3 985 494 (HOWE-BAKER) <br> * ganzes Dokument * <br><br> ---- | | |

EPA Form 1503.2   06.78